# EUROPEAN PATENT APPLICATION

(11) **EP 3 297 304 A1**
(43) Date of publication of application: **21.03.2018**
(21) Application number: 16788627.4
(22) Date of filing: 11.05.2016
(51) Int. Cl.: H04W 4/22, H04W 80/10

(54) **MOBILE COMMUNICATION SYSTEM, COMMUNICATION CONTROL DEVICE, MOBILE MANAGEMENT ENTITY, AND MOBILE COMMUNICATION METHOD**

(30) Priority: 15.05.2015 JP 2015099965
(71) Applicant: NTT DOCOMO, INC., Chiyoda-ku Tokyo 100-6150 (JP)
(72) Inventor: OHASHI, Aki, Tokyo 100-6150 (JP); MIAO, Zhen, Tokyo 100-6150 (JP); KAGI, Tomonori, Tokyo 100-6150 (JP); ABE, Motohiro, Tokyo 100-6150 (JP); KANEKO, Mana, Tokyo 100-6150 (JP)
(74) Representative: Hoffmann Eitle
(86) International application number: PCT/JP2016/064001
(87) International publication number: WO 2016/185964

(57) **Abstract**

The disclosure provides a mobile communication system, a communication control device, a mobility management entity, and a mobile communication method which can avoid a failure in making an emergency call via an IMS when a mobile station connects to a VPLMN. An HSS 100 judges whether or not an emergency call origination via an IMS 500 is supported in the VPLMN, and transmits a signal including an indicator, EM supported or EM not supported, which indicates whether or not the emergency call origination is supported, to an MME 300. The MME 300 receives the indicator from the HSS 100 and transmits, to the UE 20, Attach Accept responding to Attach Request to the VPLMN from a UE 20. Based on the indicator received from the HSS 100, the MME 300 transmits, to the UE 20, Attach Accept including the indicator which indicates whether or not the emergency call is supported.

## Description

### [Technical Field]

The present invention relates to a mobile communication system, a communication control device, a mobility management entity, and a mobile communication method, and relates to an emergency call control of a mobile station in a visited network.

### [Background Art]

Long Term Evolution (LTE) standardized by the 3rd Generation Partnership Project (3GPP) has enabled provision of a so-called Voice over LTE (VoLTE), which implements voice communications via a packet switched (PS) domain called an IP multimedia subsystem.

When a mobile station such as a smartphone supporting VoLTE makes an emergency call (originating call to an emergency service, a police, or the like), the mobile station determines whether to make the emergency call via the VoLTE or to make the emergency call after falling back (CSFB) to a circuit switched (CS) domain of 3G (UTRAN), based on the contents of "Emergency Service Support indicator" notified by a mobile management entity (MME) (see Non-patent Literature 1, for example).

Specifically, the mobile station makes the emergency call via the VoLTE when the Emergency Service Support indicator indicates that the emergency call via IMS is supported (EM supported).

### [Citation List]

### [Non-patent Literature]

[Non-patent Literature 1] 3GPP TS 23.401 V12.6.0 Subclause 4.3.12 IMS Emergency Session Support, 3rd Generation Partnership Project; Technical Specification Group Services and System Aspects; General Packet Radio Service (GPRS) enhancements for Evolved Universal Terrestrial Radio Access Network (E-UTRAN) access (Release 12), 3GPP, September 2014

### [Summary of Invention]

The mobile station is capable of connecting to not only a home network operated by an operator contracted with the mobile station for service (Home Public Land Mobile Network (HPLMN)), but also a visited network operated by another operator (Visited Public Land Mobile Network (VPLMN)).

When the mobile station connects to the VPLMN, the mobile station judges whether it is possible to make the foregoing emergency call based on the Emergency Service Support indicator notified not by an MME of the HPLMN but by an MME of the VPLMN. In such a case, based on an agreement between the operator of the HPLMN and the operator of the VPLMN, the MME of the VPLMN notifies the mobile station whether or not the origination of an emergency call via the IMS is supported in this VPLMN.

However, there is a VPLMN (operator) which notifies, with no exception regardless of such an agreement between the operators, the mobile station that the emergency call via the IMS is supported. Thus, for example, when there is a roaming agreement of the LTE itself but no agreement of supporting the origination of the emergency call via the IMS in the VPLMN, the mobile station fails in making the emergency call via the IMS although it can make a connecting request (Attach Request) to the VPLMN.

In view of this background, an objective of the present invention is to provide a mobile communication system, a communication control device, a mobility management entity, and a mobile communication method which enables a mobile station to avoid a failure in making an emergency call via IMS when connecting to a VPLMN.

A mobile communication system according to an aspect of the present invention includes a communication control device provided in a home network of a mobile station, a mobility management entity provided in a visited network of the mobile station, and a multimedia subsystem which processes a packet for an emergency call.

The communication control device includes an emergency-call-providing-domain judging unit which judges whether or not an emergency call origination via the multimedia subsystem is supported in the visited network and an indicator transmitting unit which transmits a signal including a first support indicator which indicates whether or not the emergency call origination is supported, to the mobility management entity, based on a judgment result on the emergency call origination by the emergency-call-providing-domain judging unit.

The mobility management entity includes an indicator receiving unit which receives the first support indicator from the communication control device and a response transmitting unit which transmits, to the mobile station, a response to a connection request to the visited network from the mobile station. The response transmitting unit transmits, to the mobile station, the response including a second support indicator which indicates whether or not the emergency call origination is supported based on the first support indicator received by the indicator receiving unit.

A communication control device according to an aspect of the present invention is provided in a home network of a mobile station, and used in a mobile communication system including a mobility management entity provided in a visited network of the mobile station and a multimedia subsystem which processes a packet for an emergency call.
The communication control device includes an emergency-call-providing-domain judging unit which judges whether or not an emergency call origination via the multimedia subsystem is supported in the visited network and an indicator transmitting unit which transmits a signal including a first support indicator which indicates whether or not the emergency call origination is supported, to the mobility management entity or the mobile station, based on a judgment result on the emergency call origination by the emergency-call-providing-domain judging unit.

A mobility management entity according to an aspect of the present invention is provided in a visited network of a mobile station and used in a mobile communication system including a communication control device provided in a home network of the mobile station and a multimedia subsystem which processes a packet for an emergency call.

The mobility management entity includes an indicator receiving unit which receives a first support indicator which indicates whether or not an emergency call origination via the multimedia subsystem in the visited network from the communication control device and a response transmitting unit which transmits, to the mobile station, a response to a connection request to the visited network from the mobile station. The response transmitting unit transmits, to the mobile station, the response including a second support indicator which indicates whether or not the emergency call origination is supported based on the first support indicator received by the indicator receiving unit.

A mobile communication method according to an aspect of the present invention is used in a mobile communication system including a communication control device provided in a home network of a mobile station, a mobility management entity provided in a visited network of the mobile station, and a multimedia subsystem which processes a packet for an emergency call.

The mobile communication method includes the steps of: transmitting, by the communication control device, a signal including a first support indicator which indicates whether or not an emergency call origination via the multimedia subsystem is supported in the visited network to the mobility management entity; receiving, by the mobility management entity, the first support indicator from the communication control device; and transmitting, by the mobility management entity, a response to a connection request to the visited network from the mobile station, to the mobile station. In the step of transmitting the response to the mobile station, the mobility management entity transmits, to the mobile station, the response including a second support indicator which indicates whether or not the emergency call origination is supported based on the received first support indicator.

### [Brief Description of Drawings]

[Fig. 1] Fig. 1 is an overall schematic configuration diagram of a mobile communication system 10.
[Fig. 2] Fig. 2 is a functional block configuration diagram of an HSS 100 according to a first embodiment.
[Fig. 3] Fig. 3 is a functional block configuration diagram of an MME 300 according to the first embodiment.
[Fig. 4] Fig. 4 is a diagram showing an operation sequence of notifying a UE 20 according to the first embodiment of an indicator which indicates whether or not an emergency call origination via an IMS 500 is supported.
[Fig. 5] Fig. 5 is an explanatory diagram of the operation of notifying the UE 20 according to the first embodiment of the indicator which indicates whether or not the emergency call origination via the IMS 500 is supported.
[Fig. 6] Fig. 6 is a diagram showing an operation procedure of the HSS 100 according to the first embodiment.
[Fig. 7] Fig. 7 is a diagram showing an operation procedure of the MME 300 according to the first embodiment.
[Fig. 8] Fig. 8 is an explanatory diagram of an operation of notifying a UE 20 according to a second embodiment of the indicator which indicates whether or not an emergency call origination via an IMS 500 is supported.
[Fig. 9] Fig. 9 is a functional block configuration diagram of a PGW 200 according to the second embodiment.
[Fig. 10] Fig. 10 is an explanatory diagram of an operation of notifying a UE 20 according to a third embodiment of the indicator which indicates whether or not an emergency call origination via an IMS 500 is supported.
[Fig. 11] Fig. 11 is a functional block configuration diagram of a SIP server 510 according to the third embodiment.

### [Description of Embodiments]

Hereinafter, embodiments are described based on the drawings. Note that the same or similar reference signs are applied to the same functions or configurations, and descriptions thereof are properly omitted.

### [First Embodiment]

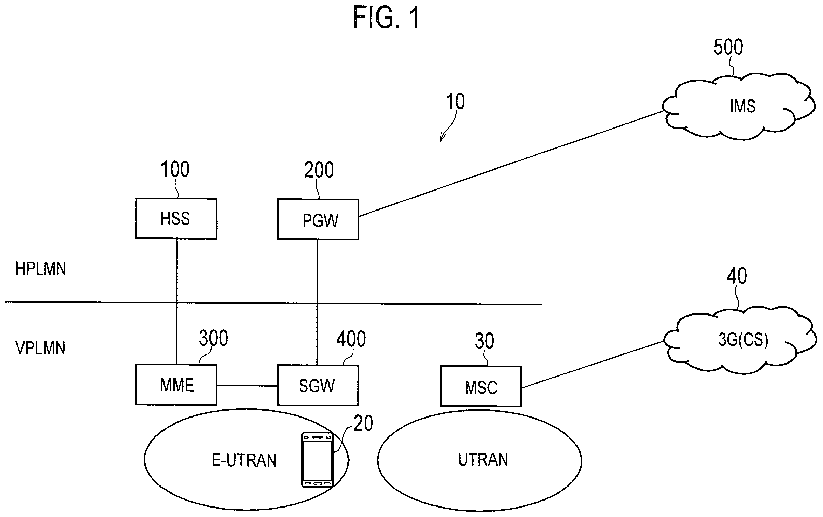

First, a first embodiment of the present invention is described with reference to Figs. 1 to 7. The embodiment is described with a control (Attach) in an EMM (EPS Mobility Management) layer as an example.

### (1) Overall Schematic Configuration of Mobile Communication System

Fig. 1 is an overall schematic configuration diagram of a mobile communication system 10 according to the embodiment. As shown in Fig. 1, the mobile communication system 10 includes a mobile station 20 (hereinafter, User Equipment 20 (UE 20)), and specifically includes a Home Subscriber Server 100 (hereinafter, HSS 100) and a PDN Gateway 200 (hereinafter, PGW 200) provided in a Home Public Land Mobile Network (HPLMN).

Further, the mobile communication system 10 includes a visited network of the UE 20, and specifically includes a mobility management entity 300 (hereinafter, MME 300) and a Serving Gateway 400 (hereinafter, SGW400) provided in a Visited Public Land Mobile Network (VPLMN).

The PGW 200 is connected to an IP multi-device subsystem (hereinafter, IMS 500) through an SGi interface. Incidentally, the IMS 500 may be connected to a device provided in the VPLMN through another interface.

The UE 20 can be wirelessly connected to an E-UTRAN, which is a Long Term Evolution (LTE) radio access network, and a UTRAN, which is a 3G radio access network. Through the E-UTRAN, the UE 20 can execute a communication with the MME 300 and the SGW 400. Further, through the UTRAN, the UE 20 can execute a communication with a Mobile Switching Center 30 (hereinafter, MSC 30).

The MSC 30 is a switching device for a circuit switching service and connected to a circuit switching domain 40 (hereinafter, CS domain 40).

The HSS 100 is a database of subscriber information of the mobile communication system 10, specifically of an operator (carrier) of the HPLMN. The HSS 100 manages information of subscriber (mobile station) identification information and in-area information.

The PGW 200 provides a function of implementing a connection between the UE 20 and a network such as the IMS 500. The MME 300 is provided in the VPLMN of the UE 20 and controls the movement of the UE 20 in the VPLMN. The SGW 400 is a packet switching device in the LTE network and transmits and receives the user data to and from the PGW 200.

The IMS 500 is a multimedia subsystem based on an IP and capable of processing a packet for a voice communication (including the emergency call).

### (2)Functional Block Configuration of Mobile Communication System

Next, functional block configurations of the HSS 100 and the MME 300 included in the mobile communication system 10 are described.

### (2.1) HSS 100

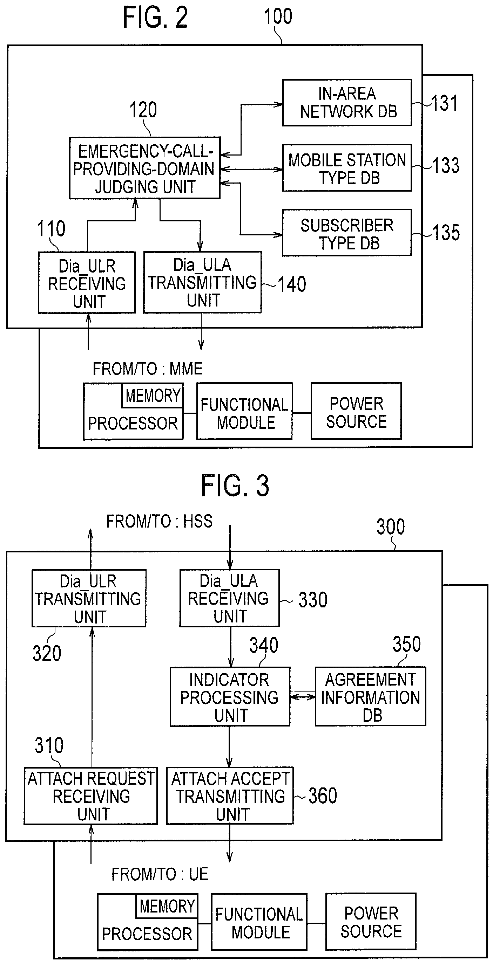

Fig. 2 is a functional block configuration diagram of the HSS 100. As shown in Fig. 2, the HSS 100 includes a Dia_ULR receiving unit 110, an emergency-call-providing-domain judging unit 120, a visited network DB 131, a mobile station type DB 133, a subscriber type DB 135, and a Dia_ULA transmitting unit 140. Note that each functional block is implemented by hardware elements such as a processor (including a memory), a functional module (a network IF and the like), and a power source.

In the embodiment, the HSS 100 forms a communication control device provided in the home network of the mobile station.

The Dia_ULR receiving unit 110 receives Dia_ULR according to a Diameter protocol from the MME 300.

Based on Dia_ULR received by the Dia_ULR receiving unit 110, the emergency-call-providing-domain judging unit 120 judges availability of an emergency call origination via the IMS 500 of the UE 20 in the VPLMN. Specifically, the emergency-call-providing-domain judging unit 120 judges an emergency-call-providing domain (the IMS 500 or the CS domain 40) in the VPLMN. In other words, the emergency-call-providing-domain judging unit 120 judges whether or not the UE 20 can execute the emergency call origination in the VPLMN using a Voice over LTE (hereinafter, VoLTE).

With reference to the visited network DB 131, the mobile station type DB 133, and the subscriber type DB 135, the emergency-call-providing-domain judging unit 120 judges whether or not the emergency call origination is supported.

Specifically, with reference to the visited network DB 131 and based on the existence of an agreement on the emergency call origination via the IMS 500 between the HPLMN and the VPLMN, the emergency-call-providing-domain judging unit 120 can judge whether or not the emergency call origination is supported.

Additionally, with reference to the mobile station type DB 133 and based on a mobile station type, the emergency-call-providing-domain judging unit 120 can also judge whether or not the emergency call origination is supported. Note that the mobile station type is a format of a mobile station which supports the function of the emergency call origination using the VoLTE, connection compatibility between a mobile station of the type and the VPLMN, or the like.

Moreover, with reference to the subscriber type DB 135 and based on a user type of the mobile station, the emergency-call-providing-domain judging unit 120 can also judge whether or not the emergency call origination is supported. Note that the user type (subscriber type) of a mobile station is a contract type and the like between the mobile station and the operator of the HPLMN, and includes availability of the VoLTE, contracted data traffic volume, and the like.

The Dia_ULA transmitting unit 140 transmits Dia_ULA according to the Diameter protocol to the MME 300. Specifically, based on the judgment result of the emergency call origination by the emergency-call-providing-domain judging unit 120, the Dia_ULA transmitting unit 140 transmits a signal including a first support indicator which indicates whether or not the emergency call origination is supported, to the mobility management entity. In the embodiment, the Dia_ULA transmitting unit 140 forms an indicator transmitting unit.

More specifically, when the emergency call origination is supported, the Dia_ULA transmitting unit 140 transmits Dia_ULA including an indicator, EM supported, which indicates that the emergency call origination is supported. On the other hand, when the emergency call origination is not supported, the Dia_ULA transmitting unit 140 transmits Dia_ULA including an indicator, EM not supported, which indicates that the emergency call origination is not supported.

### (2.2) MME 300

Fig. 3 is a functional block configuration diagram of the MME 300. As shown in Fig. 3, the MME 300 includes an Attach Request receiving unit 310, a Dia_ULR transmitting unit 320, a Dia_ULA receiving unit 330, an indicator processing unit 340, an agreement information DB 350, and an Attach Accept transmitting unit 360. Note that each functional block is implemented by hardware elements such as a processor (including a memory), a functional module (a network IF and the like), and a power source.

The Attach Request receiving unit 310 receives Attach Request, a connection request to the VPLMN, from the UE 20.

Responding to Attach Request received by the Attach Request receiving unit 310, Dia_ULR transmitting unit 320 transmits Dia_ULR according to the Diameter protocol to the HSS 100.

The Dia_ULA receiving unit 330 receives Dia_ULA transmitted by the HSS 100. In the embodiment, Dia_ULA receiving unit 330 forms an indicator receiving unit which receives the first support indicator from the communication control device.

The indicator processing unit 340 executes processing based on the indicator (EM supported or EM not supported) included in Dia_ULA received by Dia_ULA receiving unit 330. Specifically, based on the type of the indicator included in Dia_ULA, the indicator processing unit 340 determines the type of the indicator (EM supported or EM not supported) to be included in Attach Accept.

Additionally, when Dia_ULA received by the Dia_ULA receiving unit 330 includes no indicator, the indicator processing unit 340 refers to the agreement information DB 350 and determines the type of the indicator (EM supported or EM not supported) to be included in Attach Accept. Specifically, when the agreement information DB 350 indicates that the emergency call origination via the IMS 500 in the VPLMN of the UE 20, which transmits Attach Request, is supported, the indicator processing unit 340 determines to include EM supported in Attach Accept. Note that the indicators (EM supported and EM not supported) are standardized in the 3GPP TS23.401 (Subclause 4.3.12)

Moreover, the agreement information DB 350 is formed of contents determined in the agreement between the operator of the HPLMN and the operator of the VPLMN. The contents include not only the availability of the emergency call origination via the IMS 500 but also the availability of the voice communication (VoLTE) via the IMS 500.

The Attach Accept transmitting unit 360 transmits Attach Accept, a response to Attach Request received from the UE 20, to the UE 20. The UE 20 which receives Attach Accept executes connection to the E-UTRAN in the VPLMN.

In the embodiment, the Attach Accept transmitting unit 360 forms a response transmitting unit which transmits, to the mobile station, the response to the request of connecting to the visited network from the mobile station.

Based on the indicator (the first support indicator) received by the Dia_ULA receiving unit 330, the Attach Accept transmitting unit 360 transmits, to the UE 20, Attach Accept including an indicator (a second support indicator) which indicates whether the emergency call origination is supported or not.

Specifically, the Attach Accept transmitting unit 360 transmits Attach Accept including EM supported or EM not supported, which is indicated by the indicator processing unit 340, to the UE 20.

### (3) Operation of Mobile Communication System

Next, an operation of the foregoing mobile communication system 10 is described. Specifically, an operation of indicating, to the UE 20 in the VPLMN, whether the emergency call origination is supported or not, in cooperation with the HSS 100 provided in the HPLMN is described.

### (3.1) Operation Sequence

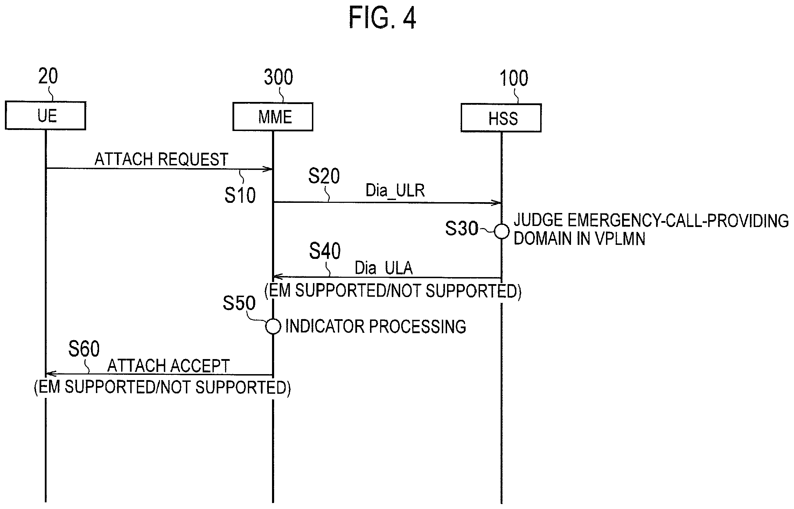

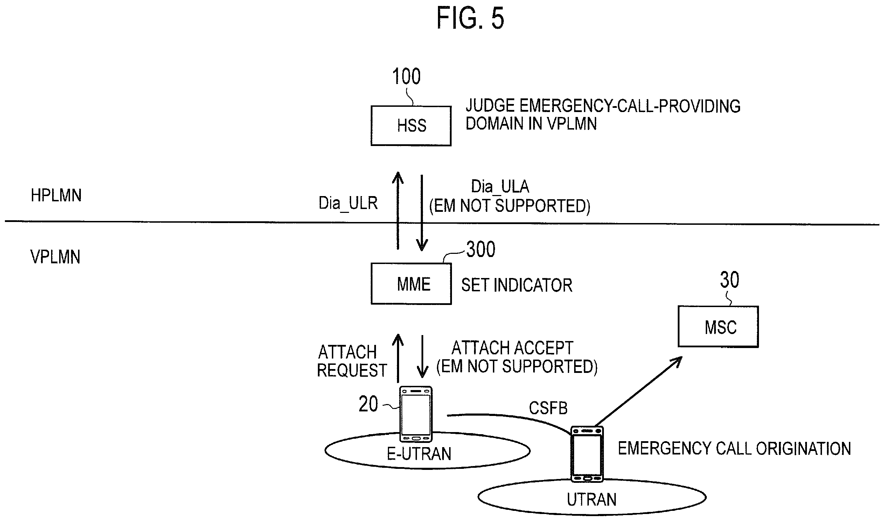

Fig. 4 shows an operation sequence of notifying the UE 20 of the indicator which indicates whether or not the emergency call origination via the IMS 500 is supported. Further, Fig. 5 is an explanatory diagram of the operation of notifying the UE 20 of the indicator which indicates whether or not the emergency call origination via the IMS 500 is supported.

As shown in Figs. 4 and 5, the UE 20 transmits Attach Request to the MME 300 in order to connect to the E-UTRAN in the VPLMN (S10 in Fig. 4, the same applies hereafter). After receiving Attach Request, the MME 300 transmits Dia_ULR to the HSS 100 (S20).

Based on the received Dia_ULR, the HSS 100 judges the emergency-call-providing domain in the VPLMN (S30).

Based on the judgment result of the emergency-call-providing domain, the HSS 100 returns Dia_ULA including EM supported or EM not supported to the MME 300 (S40) .

Based on the type of the indicator included in Dia_ULA, the MME 300 determines the type of the indicator (EM supported or EM not supported) to be included in Attach Accept (S50).

The MME 300 returns Attach Accept including the determined indicator to the UE 20 (S60).

The foregoing operation from S10 to S60 is conceptually shown in Fig. 5. Fig. 5 illustrates an example of a case where the HSS 100 judges that the emergency call origination is unavailable and EM not supported is thus indicated.

After receiving Attach Accept including EM not supported, the UE 20 recognizes that the emergency call origination via the E-UTRAN (the LTE) in the VPLMN is unavailable, and thus executes a fallback (a CSFB) to the UTRAN (the 3GCS). As a result, the UE 20 connects to the circuit switching domain and transmits the emergency call to the MSC 30.

### (3.2) Device Operation Procedure

Next, descriptions are provided for an operation of the device when the operation based on the foregoing operation sequence is executed. Specifically, an operation procedure of the HSS 100 provided in the HPLMN and an operation procedure of the MME 300 provided in the VPLMN are described.

### (3.2.1) Operation Procedure of HSS 100

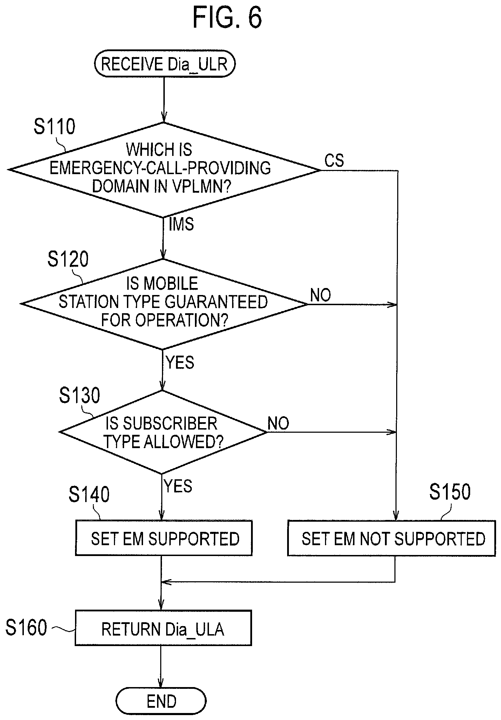

Fig. 6 shows an operation procedure of the HSS 100 provided in the HPLMN. As shown in Fig. 6, after receiving Dia_ULR from the MME 300, the HSS 100 judges that the emergency-call-providing domain in the VPLMN is either the IMS 500 or the CS domain 40 (S110). Specifically, based on the existence of the agreement on the emergency call origination via the IMS 500 between the HPLMN and the VPLMN, the HSS 100 judges the emergency-call-providing domain in the VPLMN.

When the emergency-call-providing domain is the IMS 500, the HSS 100 judges whether or not the type of the UE 20 is a mobile station type which is guaranteed for the operation in the VPLMN (S120). Specifically, as described above, the HSS 100 checks the format (model) of the mobile station supporting the function of the emergency call origination using the VoLTE, the connection compatibility between the type of the mobile station and the VPLMN, and the like.

When the mobile station type is guaranteed for the operation, the HSS 100 judges whether or not the user type (subscriber type) of the mobile station is the type which is allowed for the emergency call origination via the IMS 500 (S130).

When the subscriber type is allowed for the emergency call origination, the HSS 100 sets EM supported as the indicator included in Dia_ULA which is to be returned to the MME 300 (S140) . On the other hand, when the emergency-call-providing domain is the CS domain 40, the mobile station type is not guaranteed for the operation, or the subscriber type is not allowed for the emergency call origination, the HSS 100 sets EM not supported as the indicator included in Dia_ULA which is to be returned to the MME 300 (S150).

The HSS 100 returns Dia_ULA including EM supported or EM not supported to the MME 300 (S160).

### (3.2.2) Operation Procedure of MME 300

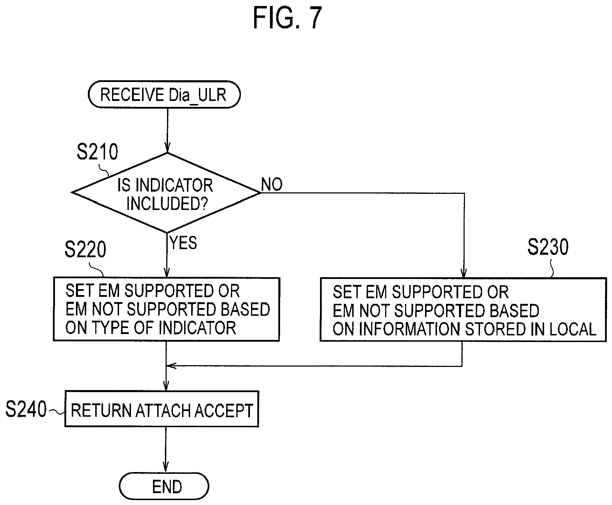

Fig. 7 shows an operation procedure of the MME 300 provided in the VPLMN. As shown in Fig. 7, after receiving Dia_ULA from the HSS 100, the MME 300 judges whether or not Dia_ULA includes the indicator (EM supported or EM not supported) which indicates whether or not the emergency call origination via the IMS 500 is supported (S210).

When Dia_ULA includes the indicator, the MME 300 sets EM supported or EM not supported as the indicator included in Attach Accept which is to be returned to the UE 20, based on the type of the received indicator (S220) . Specifically, the MME 300 sets EM supported when Dia_ULA includes EM supported, and sets EM not supported when Dia_ULA includes EM not supported.

On the other hand, when including no indicator, the MME 300 sets EM supported or EM not supported as the indicator included in Attach Accept which is to be returned to the UE 20, based on the information stored in a local (the agreement information DB 350) (S230).

Specifically, as described above, when the agreement information DB 350 indicates that the emergency call origination via the IMS 500 of the UE 20 in the VPLMN is supported, the MME 300 determines to include EM supported in Attach Accept.

The MME 300 returns Attach Accept including the set EM supported or the set EM supported to the UE 20 (S240).

### (4) Advantageous Effect

According to the embodiment, the following advantageous effects are obtained. Based on Dia_ULR received from the MME 300, the HSS 100 judges whether or not the emergency call origination via the IMS 500 (the emergency call origination using the VoLTE) is supported in the VPLMN. Additionally, the HSS 100 returns Dia_ULA including the indicator (EM supported or EM not supported) which indicates whether or not the emergency call origination is supported, to the MME 300. Moreover, the MME 300 returns Attach Accept including such indicator to the UE 20.

Consequently, the UE 20 can promptly judge whether or not the emergency call origination in the VPLMN where the UE 20 is in is supported. Thus, the UE 20 is inhibited from trying the emergency call origination via the IMS 500 in the VPLMN although the emergency call origination is not supported. That is, the UE 20 can avoid a failure in making the emergency call via the IMS 500 when connecting to the VPLMN.

Even when there is a VPLMN (the operator) which notifies the UE 20, with no exception, that the emergency call origination via the IMS is supported, and the notification is made regardless of the agreement between the operator of the HPLMN and the operator of the VPLMN, the foregoing failure of the emergency call can be reliably avoided.

Incidentally, until the emergency call origination in the VPLMN has started, the availability of the emergency call origination via the IMS had been judged by the MME provided in the HPLMN or the MME managed by the operator of the HPLMN. Hence, such problems had not been obvious.

In the embodiment, the HSS 100 can judge whether or not the emergency call origination is supported based on the existence of the agreement on the emergency call origination between the HPLMN and the VPLMN. Consequently, in the HPLMN side, the UE 20 can reliably execute the emergency call after checking the existence of the agreement.

In the embodiment, the HSS 100 can judge whether or not the emergency call origination is supported based on the type of the UE 20. Consequently, in the HPLMN side, the UE 20 can reliably execute the emergency call after checking the mobile station type which is compatible with the VPLMN.

In the embodiment, the HSS 100 can judge whether or not the emergency call origination is supported based on the user type (the subscriber type). Consequently, in the HPLMN side, the UE 20 can reliably execute the emergency call after checking the subscriber type which is compatible with the VPLMN.

### [Second Embodiment]

Next, a second embodiment of the present invention is described. The embodiment is described with a control (an EPS bearer context) in an ESM (EPS Session Management) layer as an example. Incidentally, hereinafter, parts which differ from those in the foregoing first embodiment are mainly described and descriptions of the same parts are properly omitted.

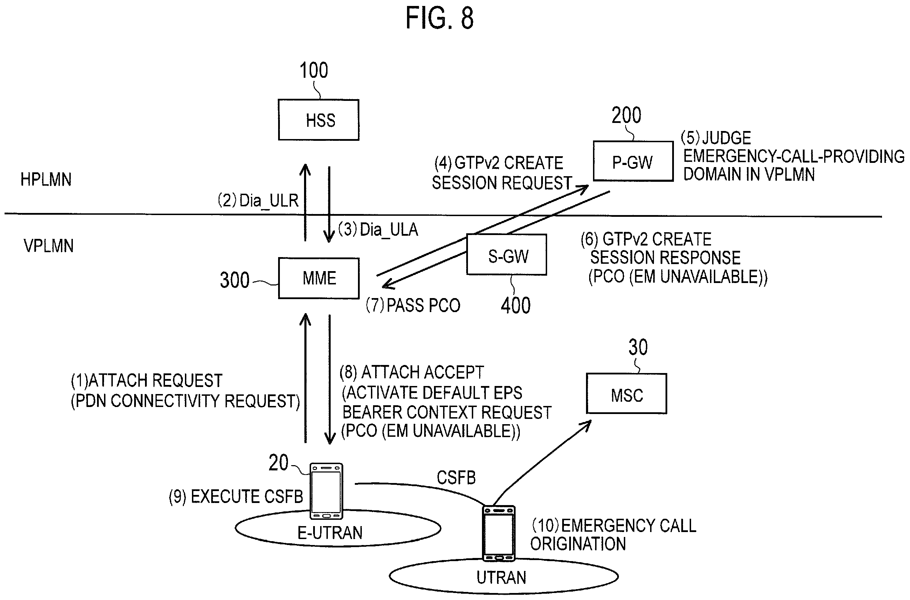

Fig. 8 is an explanatory diagram of an operation of notifying the UE 20 of the indicator which indicates whether or not the emergency call origination via the IMS 500 is supported.

As shown in Fig. 8, in the embodiment, the MME 300 transmits GTPv2 Create Session Request to the PGW 200 based on PDN connectivity Request included in Attach Request transmitted from the UE 20 ((2) and (4) in Fig. 8).

With the same operation as that of the HSS 100 in the first embodiment, the PGW 200 which receives GTPv2 Create Session Request judges the emergency-call-providing domain in the VPLMN, that is, the availability of the emergency call origination via the IMS 500 ((5) in the same). Based on the judgment result of the emergency call origination, the PGW 200 sets the indicator (the first support indicator) which indicates whether or not the emergency call origination is supported, to the UE20.

Specifically, when the emergency call origination is supported, the PGW 200 sets "PCO (EM available)" as the indicator. Note that the PCO is an abbreviation for a Protocol Configuration Option. On the other hand, when the emergency call origination is not supported, the PGW 200 sets "PCO (EM unavailable)" as the indicator. In the example in Fig. 8, an example of setting "PCO (EM unavailable)" is indicated. Incidentally, such indicators are not standardized in the existing 3GPP TS and thus they are newly standardized.

The PGW 200 returns GTPv2 Create Session Response including "PCO (EM unavailable)" to the MME 300 ((6) in the same).

The MME 300 passes (forwards) the PCO included in the received GTPv2 Create Session Response with no change, and includes the PCO, which is "PCO (EM unavailable)" (the second support indicator) in specific, in the EPS Bearer Context Request (an Active Default EPS Bearer Context Request in specific) included in Attach Accept to be returned to the UE 20 ((7) and (8) in the same).

The UE 20 which receives Attach Accept including the PCO recognizes that the emergency call origination via the E-UTRAN (the LTE) in the VPLMN is unavailable. As a result, the UE 20 executes the fallback (the CSFB) to the UTRAN (the 3G CS) and makes the emergency call to the MSC 30 ((9) and (10) in the same) .

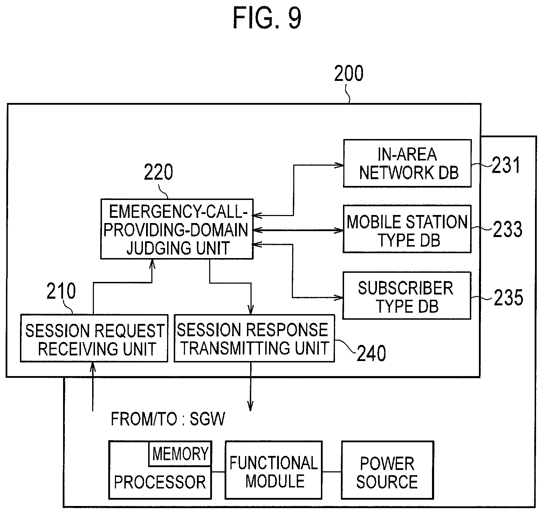

Fig. 9 is a functional block configuration diagram of the PGW 200 according to the embodiment. The PGW 200 forms the communication control device in the embodiment. As shown in Fig. 9, the PGW 200 includes a Session Request receiving unit 210, an emergency-call-providing-domain judging unit 220, a visited network DB 231, a mobile station type DB 233, a subscriber type DB 235, and a Session Response transmitting unit 240.

The functional block configuration of the PGW 200 is substantially the same as that of the HSS 100 according to the first embodiment.

Main differences between the PGW 200 and the HSS 100 are the Session Request receiving unit 210 which receives GTPv2 Create Session Request from the MME 300 through the SGW 400 and the Session Response transmitting unit 240 which transmits GTPv2 Create Session Response to the MME 300 through the SGW 400.

As seen above, although the PGW 200 judges the availability of the emergency call origination by the control (the EPS bearer context) in the ESM layer in the embodiment, the same effect as that of the first embodiment may be obtained. Selection of either the HSS 100 or the PGW 200 in order to judge the availability of the emergency call origination can be determined depending on the network configurations of the HPLMN and the VPLMN.

### [Third Embodiment]

Next, a third embodiment of the present invention is described. The embodiment is described with a control (Registration) in an IMS (an IP Multimedia Subsystem) layer as an example. Incidentally, hereinafter, parts which differ from those in the foregoing first embodiment are mainly described and descriptions of the same parts are properly omitted.

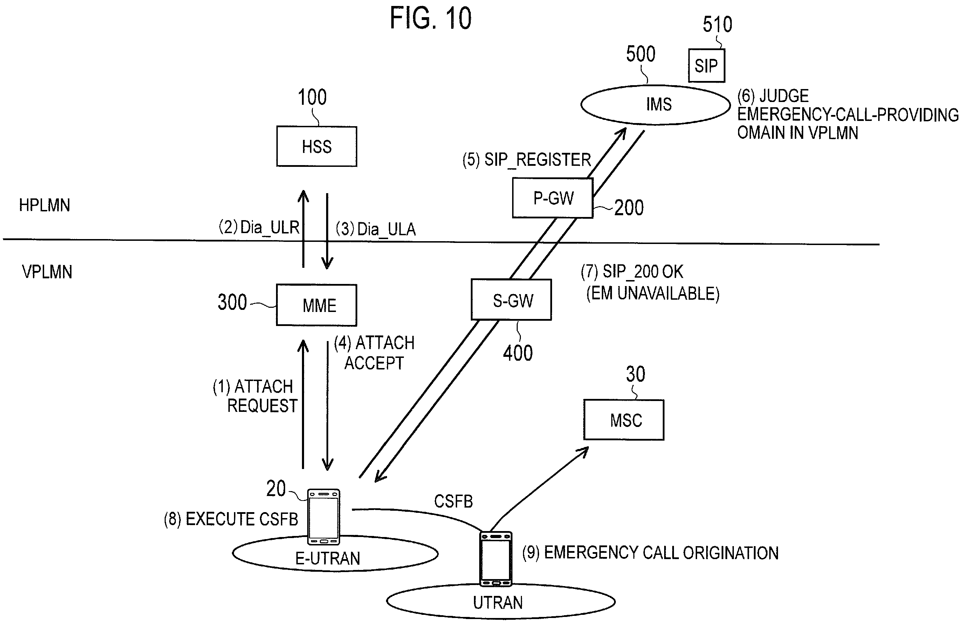

Fig. 10 is an explanatory diagram of an operation of notifying the UE 20 of the indicator which indicates whether or not the emergency call origination via the IMS 500 is supported.

As shown in Fig. 10, in the embodiment, following the operations of transmitting Attach Request and receiving Attach Accept ((1) to (4) in Fig. 10), the UE 20 transmits SIP_REGSISTER to the IMS 500, or specifically, to a SIP server 510 including the IMS 500 ((5) in the same).

With the same operation as that of the HSS 100 in the first embodiment, the SIP server 510 which receives SIP_REGSISTER judges the emergency-call-providing domain in the VPLMN, that is, the availability of the emergency call origination via the IMS 500 ((6) in the same) . Based on the judgment result of the emergency call origination, the SIP server 510 sets the indicator (the first support indicator) which indicates whether or not the emergency call origination is supported, to the UE20.

Specifically, when the emergency call origination is supported, the SIP server 510 transmits "SIP 200 OK (EM available) " which is a SIP message including the indicator, to the UE 20.

On the other hand, when the emergency call origination is not supported, the SIP server 510 transmits "SIP 200 OK (EM unavailable) " which is a SIP message including the indicator, to the UE 20.

In the example in Fig. 10, an example of transmitting "SIP 200 OK (EM unavailable)" is indicated. Incidentally, such indicators are not standardized in the existing 3GPP TS and thus they are newly standardized.

The UE 20 which receives "SIP 200 OK (EM unavailable)" through the PGW 200 and the SGW 400 recognizes that the emergency call origination through the E-UTRAN (the LTE) in the VPLMN is unavailable. As a result, the UE 20 executes the fallback (the CSFB) to the UTRAN (the 3G CS) and makes the emergency call to the MSC 30 ((8) and (9) in the same).

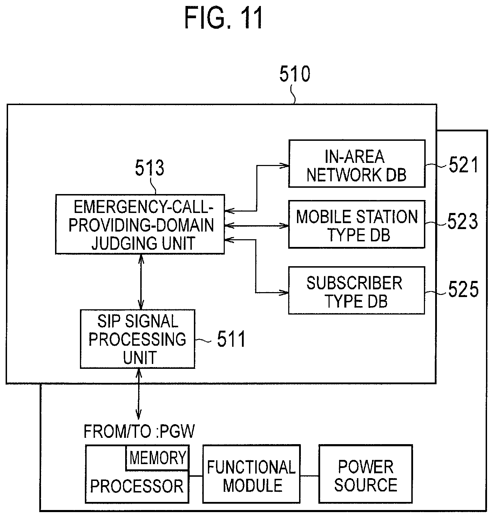

Fig. 11 is a functional block configuration diagram of the SIP server 510 according to the embodiment. The SIP server 510 forms the communication control device in the embodiment. As shown in Fig. 11, the SIP server 510 includes a SIP signal processing unit 511, an emergency-call-providing-domain judging unit 513, a visited network DB 521, a mobile station type DB 523, and a subscriber type DB 525.

The functional block configuration of the SIP server 510 is substantially the same as that of the HSS 100 according to the first embodiment. A main difference between the SIP server 510 and the HSS 100 is the SIP signal processing unit 511 which transmits and receives the SIP message.

Further, the SIP signal processing unit 511 transmits "SIP 200 OK (EM unavailable) " through the PGW 200 and the SGW 400 to the UE 20.

As seen above, although the SIP server 510 judges the availability of the emergency call origination by the control (Registration) in the IMS layer in the embodiment, the same effect as that of the first embodiment may be obtained. Selection of either the HSS 100 or the SIP server 510 in order to judge the availability of the emergency call origination can be determined depending on the network configurations of the HPLMN, the VPLMN, and IMS 500.

### [Other Embodiments]

The subject matter of the present invention has been described along the embodiments. However, it is obvious to those skilled in the art that the present invention should not be limited to the descriptions and various modifications and improvements are possible.

For example, in the foregoing first embodiment, the indicator (EM supported) that enables the emergency call origination is set when all the following conditions are met: (i) the emergency-call-providing domain is the IMS 500; (ii) the mobile station is of a type guaranteed capable of operation in the VPLMN; and (iii) the user type is accepted (the subscriber type) . However, whether or not the emergency call origination is supported may be judged based on any one of the judgment conditions (i) to (iii).

Additionally, in the first embodiment to the third embodiment, the emergency call origination via the IMS 500 in the VPLMN is controlled (regulated) by including EM supported or EM not supported in Attach Accept. However, instead of the control by Attach Accept, the emergency call origination in the VPLMN may be controlled by regulating Emergency Registration which is emergency call registration of the UE 20 to the IMS 500. For example, in the third embodiment, the emergency call origination by the UE 20 may be consequently regulated by regulating Emergency Registration by transmitting a specific SIP message (for example, SIP_4xx, where a predetermined number is set for xx) to the UE 20.

Moreover, orders of the operation sequence and procedures shown in the foregoing embodiments may be changed unless there is no contradiction.

Furthermore, for example, in the first embodiment, only EM supported may be transmitted, non-transmission of EM supported may be set to implicitly indicate that the emergency call origination is not supported, and thereby the emergency call origination may be judged not to be supported.

The foregoing embodiments are described with the LTE as an example. However, the LTE includes an LTE-Advanced and the embodiments are not limited to the LTE only. Further, the radio access network which is a fallback destination of the UE 20 is not limited to the UTRAN and may be a GERAN and the like.

As described above, the embodiments of the present invention have been described. However, it should not be understood that the descriptions and drawings which constitute part of this disclosure limit the present invention. From this disclosure, various alternative embodiments, examples, and operation techniques will be easily found by those skilled in the art.

Note that the entire content of Japanese Patent Application No. 2015-099965 (filed on May 15, 2015) is incorporated herein by reference in the present specification.

### [Industrial Applicability]

According to the foregoing mobile communication system, the communication control device, the mobility management entity, and the mobile communication method, the mobile station can avoid a failure in making the emergency call via the IMS when connecting to the VPLMN.

### [Reference Signs List]

- 10: mobile communication system
- 20: UE
- 30: MSC
- 40: CS domain
- 100: HSS
- 110: Dia_ULR receiving unit
- 120: emergency-call-providing-domain judging unit
- 131: visited network DB
- 133: mobile station type DB
- 135: subscriber type DB
- 140: Dia_ULA transmitting unit
- 200: PGW
- 210: Session Request receiving unit
- 220: emergency-call-providing-domain judging unit
- 231: visited network DB
- 233: mobile station type DB
- 235: subscriber type DB
- 240: Session Response transmitting unit
- 300: MME
- 310: Attach Request receiving unit
- 320: Dia_ULR transmitting unit
- 330: Dia_ULA receiving unit
- 340: indicator processing unit
- 350: agreement information DB
- 360: Attach Accept transmitting unit
- 400: SGW
- 500: IMS
- 510: SIP server
- 511: SIP signal processing unit
- 513: emergency-call-providing-domain judging unit
- 521: visited network DB
- 523: mobile station type DB
- 525: subscriber type DB

## Claims

1. A mobile communication system comprising:
a communication control device provided in a home network of a mobile station;
a mobility management entity provided in a visited network of the mobile station; and
a multimedia subsystem configured to process a packet for an emergency call, wherein
the communication control device includes
an emergency-call-providing-domain judging unit configured to judge whether or not an emergency call origination via the multimedia subsystem is supported in the visited network, and
an indicator transmitting unit configured to transmit a signal including a first support indicator which indicates whether or not the emergency call origination is supported, to the mobility management entity, based on a judgment result on the emergency call origination by the emergency-call-providing-domain judging unit; and
the mobility management entity includes
an indicator receiving unit configured to receive the first support indicator from the communication control device, and
a response transmitting unit configured to transmit, to the mobile station, a response to a connection request to the visited network from the mobile station, wherein
the response transmitting unit transmits, to the mobile station, the response including a second support indicator which indicates whether or not the emergency call origination is supported based on the first support indicator received by the indicator receiving unit.

2. The mobile communication system according to claim 1, wherein the emergency-call-providing-domain judging unit judges whether or not the emergency call origination is supported based on whether an agreement on the emergency call origination via the multimedia subsystem is made between the home network and the visited network.

3. The mobile communication system according to claim 1 or 2, wherein the emergency-call-providing-domain judging unit judges whether or not the emergency call origination is supported based on a type of the mobile station.

4. The mobile communication system according to any one of claims 1 to 3, wherein the emergency-call-providing-domain judging unit judges whether or not the emergency call origination is supported based on a type of a user of the mobile station.

5. A communication control device provided in a home network of a mobile station, and used in a mobile communication system including
a mobility management entity provided in a visited network of the mobile station and
a multimedia subsystem configured to process a packet for an emergency call,
the communication control device comprising:
an emergency-call-providing-domain judging unit configured to judge whether or not an emergency call origination via the multimedia subsystem is supported in the visited network; and
an indicator transmitting unit configured to transmit a signal including a first support indicator which indicates whether or not the emergency call origination is supported, to the mobility management entity or the mobile station, based on a judgment result on the emergency call origination by the emergency-call-providing-domain judging unit.

6. A mobility management entity provided in a visited network of a mobile station and used in a mobile communication system including
a communication control device provided in a home network of the mobile station and
a multimedia subsystem configured to process a packet for an emergency call, and
the mobility management entity comprising:
an indicator receiving unit configured to receive a first support indicator which indicates whether or not an emergency call origination via the multimedia subsystem is supported in the visited network, from the communication control device; and
a response transmitting unit configured to transmit, to the mobile station, a response to a connection request to the visited network from the mobile station, wherein
the response transmitting unit transmits, to the mobile station, the response including a second support indicator which indicates whether or not the emergency call origination is supported based on the first support indicator received by the indicator receiving unit.

7. A mobile communication method in a mobile communication system including
a communication control device provided in a home network of a mobile station,
a mobility management entity provided in a visited network of the mobile station, and
a multimedia subsystem configured to process a packet for an emergency call, the mobile communication method comprising the steps of:
transmitting, by the communication control device, a signal including a first support indicator which indicates whether or not an emergency call origination via the multimedia subsystem is supported in the visited network, to the mobility management entity;
receiving, by the mobility management entity, the first support indicator from the communication control device; and
transmitting, by the mobility management entity, a response to a connection request to the visited network from the mobile station, to the mobile station, wherein
in the step of transmitting the response to the mobile station, the mobility management entity transmits, to the mobile station, the response including a second support indicator which indicates whether or not the emergency call origination is supported based on the received first support indicator.
